# FASCICULE DE BREVET EUROPEEN

(11) **EP 0 696 951 B1**
(45) Date de publication et mention de la délivrance du brevet: **02.01.1997**
(21) Numéro de dépôt: 94913669.1
(22) Date de dépôt: 20.04.1994
(51) Int. Cl.: B29C 33/58, B29B 13/02, B05D 5/08, B05D 7/02

(54) **PROCEDE DE TRAITEMENT ANTI-ADHERENT EN CONTINU D'UN ADHESIF THERMOFUSIBLE COLLANT EN SURFACE**
VERFAHREN ZUR KONTINUIERLICHEN ANTIADHESIVBEHANDLUNG EINES OBERFLÄCHEKLEBUNGENWÄRMESCHMELZBAREN KLEBSTOFFES
CONTINUOUS ANTI-ADHERENT TREATMENT PROCESS FOR A HEAT FUSIBLE SURFACE-TACKING ADHESIVE

(30) Priorité: 22.04.1993 FR 9304762
(43) Date de publication de la demande: 21.02.1996
(73) Titulaire: HENKEL FRANCE S.A., 92102 Boulogne Billancourt (Hauts de Seine) (FR); Henkel Kommanditgesellschaft auf Aktien, 40191 Düsseldorf (DE)
(72) Inventeur: FAYOLLE, Jean, F-91430 Igny (FR); FROMIGUE, Bernard, F-51000 Châlons-sur-Marne (FR); GRANDIN, Daniel, Villiers-le-Chateau (FR); NIETHEN, Heinrich, F-78370 Plaisir (FR); PIERRON, Michel, F-51470 Saint-Memmie (FR); PREVOT, Jean-Louis, F-51160 Hautvillers (FR)
(74) Mandataire: Cabinet HERRBURGER
(86) Numéro de dépôt international: FR9400443
(87) Numéro de publication internationale: WO9423921

(56) Documents cités:
- EP-A- 0 258 086
- EP-A- 0 412 867
- EP-A- 0 452 186
- EP-A- 0 469 564
- GB-A- 1 019 808
- US-A- 5 160 686

## Description

La présente invention concerne un procédé de traitement anti-adhérent en continu d'un adhésif thermofusible collant en surface.

Dans de nombreux domaines de la chimie industrielle, il est courant d'utiliser des masses adhésives thermofusibles collantes en surface, c'est-à-dire des matériaux qui, à la température de manipulation, généralement la température ambiante sont caractérisés par un ou plusieurs des critères suivants :
- adhésivité intrinsèque de la masse,
- adhésivité en surface dans les conditions normales de température et de pression,
- sensibilité à la pression,
- accroissement de l'adhésivité en surface avec un accroissement de la température (l'été par exemple).

A titre d'exemple non exhaustif, ces produits peuvent intervenir dans la fabrication d'articles d'hygiène (changes complets, articles d'hygiène féminine), de moquettes et revêtements adhévisés, de barres de seuil autoadhésives, d'enveloppes et d'étiquettes adhésivées ou encore dans la fixation ou le collage de différents supports en application directe.

Compte tenu du caractère adhésif permanent de ces matériaux, il est impératif qu'ils subissent un traitement anti-adhérent pour en permettre une manipulation, un transport et un stockage plus aisé.

De plus, ce traitement permet d'éviter une agglomération de plusieurs fragments de ces matériaux ainsi qu'un dépôt d'impuretés sur ces derniers.

Dans ce but, les adhésifs thermofusibles collants en surface sont classiquement livrés dans des barquettes paraffinées ou siliconées, ce qui permet d'éviter toute adhésion ; ce mode de conditionnement est, cependant, particulièrement onéreux et peu pratique, étant donné que les barquettes ont en général une contenance comprise entre 500 g et 5 kg et qu'il n'est pas rare que des utilisateurs doivent 〈〈 démouler 〉〉 une grande quantité par jour pouvant atteindre plusieurs tonnes.

Pour remédier à ces inconvénients, on a déjà proposé de faire subir aux adhésifs thermofusibles divers traitements permettant de leur faire perdre leur adhérence en surface et par suite de les conditionner directement en vrac.

On a, par exemple, déjà proposé de coextruder une gaine entourant le produit thermofusible ; la matière de coextrusion peut être, par exemple, du polyéthylène ou un 〈〈 hot melt 〉〉 non auto-adhérent compatible avec la formulation du produit extrudé.

On a également déjà proposé de protéger des matières adhésives par déposition électrostatique d'une fine couche d'agent anti-adhérent pulvérulent dans un moule dans lequel on coule l'adhésif.

On a également déjà proposé un procédé de pulvérisation d'un 〈〈 hot melt 〉〉 non auto-adhérent contenu dans un moule.

Ces différents processus de traitement présentent toutefois, l'inconvénient d'être onéreux, peu pratiques et souvent difficiles à mettre en oeuvre en continu.

Indépendamment de ce qui précède, on connaît par le document EP-A-0 141 087, un procédé de traitement anti-adhésif en discontinu d'un élastomère destiné en fin de traitement à subir un processus de vulcanisation à l'issue duquel il perd tout caractère collant. Un tel élastomère constitue, toutefois, un produit intermédiaire fondamentalement différent d'un adhésif thermofusible collant en surface qui est destiné à être commercialisé en l'état.

On connaît également par le document EP-A-0 412 867 un procédé de traitement anti-adhérent en continu d'un adhésif thermofusible collant en surface par lequel on applique un revêtement d'un agent anti-adhérent compatible avec l'adhésif thermofusible et n'entraînant pas de modifications physico-chimiques significatives de celui-ci sur au moins une partie de la surface d'un cordon de cet adhésif sortant en continu d'un échangeur extrudeur ou d'une filière, à une température supérieure à sa température de ramollissement, on refroidit le cordon ainsi revêtu puis on le découpe à la longueur souhaitée et on conditionne directement les fractions ainsi obtenues en vue de leur commercialisation en tant que produits finis sans prendre de précautions supplémentaires.

Ce procédé, malgré ses avantages, s'est révélé à l'usage difficile à maîtriser.

La présente invention a pour objet de remédier aux inconvénients susmentionnés en proposant un nouveau procédé de traitement anti-adhérent en continu d'un adhésif thermofusible collant en surface.

Conformément à la l'invention, ce procédé est caractérisé en ce que :
- on déplace constamment en translation un tapis transporteur muni d'une surface supérieure lisse et anti-adhésive,
- on refroidit cette surface par sa face inférieure,
- on recouvre cette surface, à partir d'un poste de recouvrement, par une couche d'un produit de protection anti-adhérent compatible avec l'adhésif thermofusible à traiter et n'entraînant pas de modification physico-chimique significative de celui-ci,
- à partir d'un poste de dépôt situé en aval du poste de recouvrement dans le sens de déplacement du tapis transporteur, on dépose sur la couche de produit de protection, par coulée libre ou sous pression, l'adhésif thermofusible à traiter sortant en continu d'un mélangeur extrudeur ou d'une filière,
- on replie sur lui même l'ensemble constitué par l'adhésif et la couche de produit de protection anti-adhérent autour de son axe longitudinal médian de façon à libérer un matériau composite constitué par une double épaisseur d'adhésif thermofusible prise en sandwich entre deux couches de produit de protection anti-adhérent, et
- on découpe ce matériau composite en fragments que l'on conditionne directement sans prendre de précaution supplémentaire.

Il est à noter que l'étape de repliement sur lui-même de l'ensemble constitué par l'adhésif et la couche de produit de protection anti-adhérent peut être effectuée soit à l'extrémité du tapis transporteur alors que le matériau composite se trouve étalé horizontalement, soit plus en aval et alors que le matériau composite se trouve dirigé obliquement ou verticalement, notamment après être passé sur des galets de changement de direction.

Cette étape de repliement correspond à une étape essentielle de l'invention, vu qu'elle présente l'avantage de nécessiter une quantité moindre de produit de protection anti-adhérent et de permettre l'obtention d'une épaisseur double d'adhésif.

Il est bien entendu essentiel dans tous les cas que la couche de produit de protection anti-adhérent soit continue et suffisamment épaisse pour que l'adhésif thermofusible, qui est coulé à température élevée, ne risque pas d'adhérer sur la surface supérieure du tapis transporteur.

Conformément à l'invention, cette surface peut être en un matériau lisse et anti-adhésif quelconque tel que par exemple acier inox ou Téflon®.

Selon une caractéristique préférentielle de l'invention, on utilise, en tant que tapis transporteur, la partie supérieure d'une plaque essentiellement rigide refermée sur elle-même en une boucle et constamment entraînée en rotation autour de deux cylindres rotatifs.

L'utilisation d'une telle boucle s'est en effet avérée particulièrement pratique à l'usage.

Selon une autre caractéristique préférentielle de l'invention, à partir du poste de dépôt, on dépose sur la couche de produit de protection anti-adhérent des bandes essentiellement parallèles de l'adhésif thermofusible à traiter, de façon à libérer, notamment à l'extrémité du tapis transporteur, un matériau composite constitué par une double épaisseur de bandes d'adhésif thermofusible prise en sandwich entre deux couches de produit de protection anti-adhérent et l'on fractionne ce matériau composite en rubans par des découpes longitudinales essentiellement parallèles situées entre les bandes d'adhésif thermofusible.

Il s'agit là d'une caractéristique particulièrement avantageuse de l'invention, compte tenu du fait qu'il est ainsi possible de ne pas encrasser l'outil de coupe lors de cette fragmentation longitudinale.

Il est à noter que, conformément à l'invention, il convient de veiller à déposer sur la couche de produit de protection anti-adhérent un nombre pair de bandes d'adhésif thermofusible afin que l'axe longitudinal médian autour duquel est effectué l'opération de repliement se trouve entre deux bandes et non au centre de l'une de celles-ci.

Après la fragmentation susmentionnée, il est nécessaire de refragmenter les rubans perpendiculairement de façon à permettre d'obtenir des fragments essentiellement de forme rectangulaire.

A cet effet, et selon une autre caractéristique de l'invention, on fragmente les rubans en comprimant la surface de tranchage de façon telle que ses bords adhèrent les uns contre les autres.

Ce 〈〈 rabattement 〉〉 des 〈〈 lèvres 〉〉 de tranchage les unes contre les autres, qui correspond à une caractéristique connue en elle-même, permet de supprimer toute surface de tranchage non revêtue de produit de protection anti-adhérent et donc de conditionner sans protection préalable les fragments découpés sans risque d'agglomération au niveau des tranches.

Pour effectuer cette seconde fragmentation, on peut utiliser des moyens connus en eux-mêmes, tels que par exemple organes de découpe à lames revêtues de produit anti-adhérent, roues à aube ou organes de découpe autres, notamment à guillotine.

L'invention permet, bien entendu, le traitement de tous les adhésifs thermofusibles collants en surface ; parmi les matières pouvant être traitées, on peut, à titre d'exemple, mentionner les composés énumérés ci-après :
- formulations à base d'EVA, de copolymères styrène-butadiène-styrène (SBS), de styrène-isoprène-styrène (SIS),
- formulations à base de résines et de dérivés (par exemple les résines de colophane, coumarone, d'indène, d'hydrocarbures aliphatiques et aromatiques),
- formulations à base de copolymères styrène-éthylène-butylène (SEB), de styrène-éthylène-butylène-styrène (SEBS),
- formulations à base de polyesters, de polyamides,
- d'une façon plus générale, toutes les formulations issues de la combinaison des polymères ou copolymères, polycondensats et copolycondensats mentionnés ci-dessus.

Selon une autre caractéristique particulièrement avantageuse de l'invention, à partir du poste de recouvrement, on répand un adhésif thermofusible non collant en surface à l'état fondu sur la surface supérieure du tapis transporteur.

Cette opération peut être effectuée par tout moyen, en particulier par pulvérisation, par coulée en rideau à partir d'une fente, selon un processus classiquement utilisé, notamment dans le domaine du vernissage, ou encore en mettant en oeuvre des cylindres applicateurs.

Une telle opération, qui revient à fabriquer 〈〈 in situ 〉〉 un film de protection anti-adhérent qui se solidifie immédiatement sur la surface supérieure refroidie de la bande transporteuse présente l'avantage de permettre de choisir l'adhésif thermofusible de protection parmi une grande variété de produits possibles et donc d'adapter exactement celui-ci aux caractéristiques du produit à protéger.

Une autre possibilité conforme à l'invention consiste à remplacer le film d'adhésif thermofusible non collant en surface formé 〈〈 in situ 〉〉 sur la surface même du tapis transporteur par un film préfabriqué de polymère anti-adhérent compatible avec l'adhésif thermofusible à traiter que l'on déroule sur la surface supérieure du tapis à partir du poste de recouvrement.

Ces deux variantes de l'invention, bien que préférentielles, ne doivent en aucune manière être considérées comme étant limitatives de l'invention, et le recouvrement de la surface supérieure du tapis transporteur par une couche de protection pourrait être effectué de manière autre.

A titre d'exemple et plus classiquement, on peut envisager de 〈〈 saupoudrer 〉〉 cette surface à l'aide d'une poudre anti-adhérente, notamment de l'un des produits mentionnés dans le document EP-A-0 412 867 (esters métalliques notamment choisis dans le groupe formé par les stéarates, les octoates, les éthyl-hexanoates et les oléates de calcium, de baryum, d'aluminium et/ou de zinc...).

Un tel processus présente toutefois par rapport aux deux variantes susmentionnées l'inconvénient de ne pas permettre une adaptation aussi précise des caractéristiques du produit de protection utilisé à celles de l'adhésif thermofusible à traiter.

Les caractéristiques du procédé qui fait l'objet de l'invention seront décrites plus en détail en se référant aux dessins annexés dans lesquels :
- la figure 1 est une coupe longitudinale schématique d'une installation permettant la mise en oeuvre du procédé conforme à l'invention,
- la figure 2 est une coupe schématique du matériau composite libéré à l'extrémité du tapis transporteur par un plan schématisé par la double flèche C-C de la figure 1.

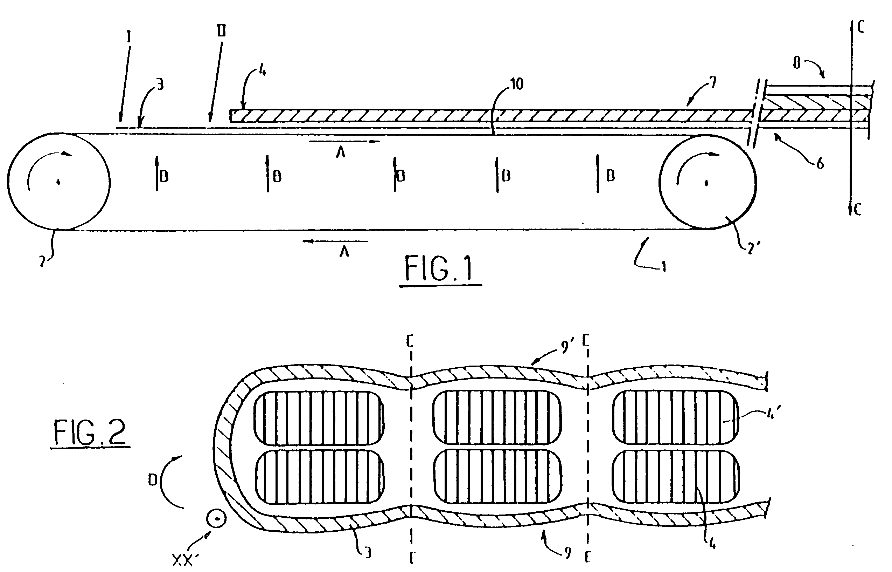

Selon la figure 1, le procédé est mis en oeuvre au niveau de la surface supérieure 10 d'une plaque essentiellement rigide 1 refermée sur elle-même en une boucle et entraînée en rotation selon les flèches A autour de deux cylindres rotatifs 2 et 2'.

La surface supérieure 10 est constamment refroidie par sa face inférieure par des moyens de refroidissement schématisés par les flèches B et fait office de tapis transporteur pour assurer le déplacement en continu de l'adhésif thermofusible au droit d'une succession de postes de traitement.

Conformément à l' invention, dans une première étape, on recouvre la surface supérieure 10 de la plaque 1, à partir d'un poste de recouvrement schématisé par la flèche I, par une couche continue 3 d'un produit de protection anti-adhérent compatible avec l'adhésif thermofusible et n'entraînant pas de modifications physico-chimiques significatives de celui-ci.

Comme il a déjà été indiqué, et de façon non limitative de l'invention, cette opération de recouvrement peut correspondre à l'application d'un adhésif thermofusible non collant en surface, soit répandu à l'état fondu par pulvérisation, coulée en rideau ou à l'aide de cylindres enducteurs, avec refroidissement immédiat au contact de la surface refroidie, soit sous la forme d'un film préfabriqué déroulé sur la surface 10 ou encore au 〈〈 saupoudrage 〉〉 par d'une poudre mise en oeuvre sur une épaisseur suffisante pour ne risquer d'être ensuite traversée par l'adhésif à traiter.

Après application de la couche 3, on dépose en continu, sur celle-ci, des bandes 4 essentiellement parallèles de l'adhésif thermofusible à traiter, directement à sa sortie de la filière, par coulée libre ou sous pression, à partir d'un poste de dépôt schématisé par la flèche II.

Ensuite, dans une troisième étape, on replie sur lui-même l'ensemble 7 constitué par l'adhésif 4 et la couche 3 selon la flèche D autour de son axe longitudinal médian schématisé par l'axe x-x' sur la figure 2.

A l'extrémité 6 de la surface 10, on peut ainsi libérer un matériau composite 8.

Selon la figure 2, ce matériau composite 8 est constitué par une double épaisseur de bande 4, 4' prise en sandwich entre deux couches 9, 9' du produit de protection anti-adhérent constitutif de la couche initiale 3. Cette libération est largement facilitée par le refroidissement de la surface 10 ainsi que par son caractère lisse.

Selon la figure 2, il est clair qu'à partir du matériau composite 8, il est possible d'obtenir des rubans d'adhésif thermofusible protégés par découpe par des plans longitudinaux schématisés par les axes E-E situés entre les différentes bandes 4, 4'. Une telle fragmentation offre l'avantage de ne pas présenter de risque d'encrassement des couteaux utilisés pour la découpe.

Les rubans ainsi obtenus doivent ensuite être refragmentés perpendiculairement aux plans E-E de façon à obtenir des blocs pouvant être directement commercialisés en tant que produits finis.

A cet effet et de façon non représentée sur les figures, on peut utiliser des moyens connus en eux-mêmes tels que par exemple organes de découpe à lames revêtues de produit anti-adhérent, roues à aube ou organes de découpe autres notamment à guillotine.

## Revendications

1. Procédé de traitement anti-adhérent en continu d'un adhésif thermofusible collant en surface, caractérisé en ce que :
- on déplace constamment en translation un tapis transporteur (1) muni d'une surface supérieure (10) lisse et anti-adhésive,
- on refroidit cette surface par sa face inférieure,
- on recouvre cette surface, à partir d'un poste de recouvrement (I), par une couche (3) d'un produit de protection anti-adhérent compatible avec l'adhésif thermofusible à traiter et n'entraînant pas de modification physico-chimique significative de celui-ci,
- à partir d'un poste de dépôt (II) situé en aval du poste de recouvrement (I) dans le sens de déplacement (A) du tapis transporteur (1), on dépose sur la couche (3) de produit de protection, par coulée libre ou sous pression, l'adhésif thermofusible (4) à traiter sortant en continu d'un mélangeur extrudeur ou d'une filière,
- on replie sur lui même l'ensemble (7) constitué par l'adhésif (4) et la couche (3) de produit de protection anti-adhérent autour de son axe longitudinal médian (x-x') de façon à libérer un matériau composite (8) constitué par une double épaisseur (4, 4') d'adhésif thermofusible prise en sandwich entre deux couches (9, 9') de produit de protection anti-adhérent (3), et
- on découpe ce matériau composite en fragments que l'on conditionne directement sans prendre de précaution supplémentaire.

2. Procédé selon la revendication 1, caractérisé en ce que l'on utilise, en tant que tapis transporteur, la partie supérieure d'une plaque (1) essentiellement rigide refermée sur elle-même en une boucle et constamment entraînée en rotation autour de deux cylindres rotatifs (2, 2').

3. Procédé selon l'une quelconque des revendications 1 et 2, caractérisé en ce que, à partir du poste de dépôt (II), on dépose sur la couche (3) de produit de protection anti-adhérent des bandes (4) essentiellement parallèles de l'adhésif thermofusible à traiter, de façon à libérer un matériau composite (7) constitué par une double épaisseur de bandes d'adhésif thermofusible (4, 4') prise en sandwich entre deux couches (9, 9') de produit de protection anti-adhérent (3) et l'on fractionne ce matériau composite en rubans par des découpes longitudinales essentiellement parallèles situées entre les bandes d'adhésif thermofusible de façon à ne pas encrasser l'outil de coupe, notamment le couteau, lors de cette fragmentation.

4. Procédé selon la revendication 3, caractérisé en ce que l'on fragmente les rubans (4, 4') de façon connue en elle-même en comprimant la surface de tranchage de façon telle que ses bords adhèrent les uns contre les autres, permettant ainsi d'obtenir des fragments revêtus de produit de protection anti-adhérent (3) sur la totalité de leur surface.

5. Procédé selon l'une quelconque des revendications 1 à 4, caractérisé en ce que l'adhésif thermofusible appartient au groupe constitué par des adhésifs thermofusibles à base d'EVA, de copolymères styrène-butadiène-styrène (SBS), de styrène-isoprène-styrène (SIS), d'élastomères de synthèse, de résines de dérivés de copolymères styrène-éthylène-butylène (SEB) et/ou de styrène-éthylène-butylène-styrène (SEBS), de polyesters, de polyamides et par toutes les combinaisons de ces polymères ou copolymères.

6. Procédé selon l'une quelconque des revendications 1 à 5, caractérisé en ce que, à partir du poste de recouvrement (I), on répand un adhésif thermofusible (3) non collant en surface à l'état fondu sur la surface supérieure (10) du tapis transporteur (1).

7. Procédé selon l'une quelconque des revendications 1 à 5, caractérisé en ce que, à partir du poste de recouvrement (I), on déroule sur la surface supérieure (10) du tapis transporteur (1) un film préfabriqué (3) de polymère non adhérent compatible avec l'adhésif thermofusible à traiter.

## Claims

1. Continuous anti-adherent treatment process for a heat-fusible surface-tacking adhesive, characterised in that:
- a conveyor belt (1) provided with a smooth and anti-adhesive upper surface (10) is displaced constantly in translation;
- this surface is cooled at its lower face;
- this surface is covered, from a covering station (I), with a layer (3) of an anti-adherent protection product which is compatible with the heat-fusible adhesive to be treated and which causes no significant physico-chemical change in the latter;
- from a depositing station (II) arranged downstream of the covering station (I) in the direction of displacement (A) of the conveyor belt (1), the heat-fusible adhesive (4) to be treated, which is discharged continuously from an extruder mixer or from a die, is deposited on the layer (3) of protection product by free casting or pressure casting;
- the whole (7) formed by the adhesive (4) and the layer (3) of anti-adherent protection product is folded on itself about its median longitudinal axis (x-x') in such a manner as to provide a composite material (8) formed by a double thickness (4, 4') of heat-fusible adhesive sandwiched between two layers (9, 9') of anti-adherent protection product (3); and
- this composite material is cut into sections which are packaged directly without taking any further precautions.

2. Process according to Claim 1, characterised in that the upper portion of a substantially rigid plate (1) which is closed on itself to form a loop and which is rotated constantly about two rotatable cylinders (2, 2') is used as the conveyor belt.

3. Process according to either Claim 1 or Claim 2, characterised in that, from the depositing station (II), substantially parallel strips (4) of the heat-fusible adhesive to be treated are deposited on the layer (3) of anti-adherent protection product in such a manner as to provide a composite material (7) which is formed by a double thickness of strips (4, 4') of heat-fusible adhesive sandwiched between two layers (9, 9') of anti-adherent protection product (3), and this composite material is divided up into ribbons by substantially parallel longitudinal cuts located between the strips of heat-fusible adhesive in such a manner as not to soil the cutting tool, especially the knife, during this sectioning process.

4. Process according to Claim 3, characterised in that the ribbons (4, 4') are sectioned in a manner known per se by compressing the slicing surface in such a manner that its edges adhere to one another, thus enabling sections coated with anti-adherent protection product (3) over their entire surface to be obtained.

5. Process according to any one of Claims 1 to 4, characterised in that the heat-fusible adhesive belongs to the group formed by heat-fusible adhesives based on EVA, styrene/butadiene/styrene (SBS) copolymers, styrene/isoprene/styrene (SIS) copolymers, synthesis elastomers, resins of derivatives of styrene/ethylene/butylene (SEB) and/or styrene/ethylene/butylene/styrene (SEBS) copolymers, polyesters, polyamides or by any combination of these polymers or copolymers.

6. Process according to any one of Claims 1 to 5, characterised in that, from the covering station (I), a heat-fusible non-surface-tacking adhesive (3) is spread in the molten state onto the upper surface (10) of the conveyor belt (1).

7. Process according to any one of Claims 1 to 5, characterised in that, from the covering station (I), a prefabricated film (3) of non-adherent polymer compatible with the heat-fusible adhesive to be treated is unwound onto the upper surface (10) of the conveyor belt (1).

## Patentansprüche

1. Verfahren zur kontinuierlichen Antihaftbehandlung eines thermoschmelzenden, auf einer Oberfläche haftenden Klebmittels, **dadurch gekennzeichnet,** daß
- ein Bandförderer (1) mit einer glatten und anti-adhäsiven Oberfläche (10) konstant translatorisch bewegt wird,
- die Oberfläche von ihrer Unterseite her gekühlt wird,
- die Oberfläche von einer Beschichtungsstelle (I) an mit einer Schicht (3) eines anti-adhäsiven Schutzprodukts, das mit dem zu behandelnden thermoschmelzenden Klebmittel kompatibel und durch dieses keinen erheblichen physikalisch chemischen Modifikationen ausgesetzt ist,
- auf der Schicht (3) des Schutzproduktes von einer der Beschichtungsstelle (I) in Bewegungsrichtung (A) des Bandtransporteurs (1) nachgeordneten Depotstelle (II) an durch druckfreies oder unter Druck erfolgendes Gießen das zu behandelnde thermoschmelzende, kontinuierlich aus einem Mischextruder oder einer Düse austretende Klebmittel (4) aufgebracht wird,
- die von dem Klebmittel (4) und der Schicht (3) des anti-adhäsiven Schutzproduktes gebildete Gesamtheit (7) um ihre Längsmittelachse (x-x') unter Bildung einer Materialzusammenstellung (8) auf sich selbst umgefaltet wird, die von einer doppelten Dicke (4,4') des thermoschmelzenden Klebmittels in Sandwichanordnung zwischen zwei Schichten (9,9') des anti-adhäsiven Schutzproduktes (3) gebildet ist, und die Materialzusammenstellung in Teile geschnitten wird, die direkt ohne ein Ergreifen zusätzlicher Vorsichtsmaßnahmen verpackt werden.

2. Verfahren nach Anspruch 1, **dadurch gekennzeichnet,** daß der obere Bereich einer im wesentlichen festen, eine geschlossene Schlaufe bildenden Platte als Bandförderer verwendet wird, die in konstanten Umlauf um zwei drehbare Zylinder (2,2') versetzt wird.

3. Verfahren nach Anspruch 1 oder 2, **dadurch gekennzeichnet,** daß auf der Schicht (3) des anti-adhäsiven Schutzprodukts von der Depotstelle (II) an im wesentlichen parallele Streifen des zu behandelnden thermoschmelzenden Klebmittels derart aufgebracht werden, daß eine Materialzusammenstellung (8) gebildet wird, die von einer doppelten Dicke der thermoschmelzenden Klebmittelstreifen (4,4') in Sandwichanordnung zwischen zwei Schichten (9,9') des anti-adhäsiven Schutsproduktes (3) gebildet ist, und daß die Materialzusammensetzung durch im wesentlichen parallele Längsschnitte in Bänder unterteilt wird, wobei die Längsschnitte zwischen den Streifen des thermoschmelzenden Klebmittels derart angeordnet sind, daß bei der Unterteilung das Schneidwerkzeug, insbesondere das Schneidmesser, keine Verschmutzung erfährt.

4. Verfahren nach Anspruch 3, **dadurch gekennzeichnet,** daß die Bänder (4,4') in an sich bekannter Weise unter Zusammendrücken des Schneidbereichs derart, daß ihre Ränder aneinanderhaften, in Stücke unterteilt werden, die auf der Gesamtheit ihrer Oberfläche von dem anti-adhäsiven Schutzprodukt überzogen sind.

5. Verfahren nach einem der Ansprüche 1 bis 4, **dadurch gekennzeichnet,** daß das thermoschmelzende Klebmittel zu der Gruppe gehört, die durch thermoschmelzende Klebmittel auf der Basis von EVA, von Copolymeren Styrol-Butadien-Styrol (SBS), Styrol-Isopren-Styrol (SIS), von synthetischen Elastomeren, von Harzen aus Derivaten von Copolymeren Styrol-Äthylen-Butylen (SEB) und/oder Styrol-Äthylen-Butylen-Styrol (SEBS) und von Polyestern, Polyamiden oder irgendwelchen Kombinationen dieser Polymere oder Copolymere gebildet ist.

6. Verfahren nach einem der Ansprüche 1 bis 5, **dadurch gekennzeichnet,** daß von der Beschichtungsstelle (I) an ein an der Oberfläche nicht haftendes thermoschmelzendes Klebmittel in geschmolzenem Zustand auf der Oberfläche (10) des Bandförderers aufgebracht wird.

7. Verfahren nach einem der Ansprüche 1 bis 5, **dadurch gekennzeichnet,** daß von der Beschichtungsstelle (I) an auf die Oberfläche (10) des Bandförderers (1) ein vorgefertigter Film eines nicht-adhäsiven Polymers aufgerollt wird, der mit dem zu behandelnden thermoschmelzenden Klebmittel kompatibel ist.
